# EUROPÄISCHE PATENTSCHRIFT

(11) **EP 1 091 041 B1**
(45) Veröffentlichungstag und Bekanntmachung des Hinweises auf die Patenterteilung: **07.07.2004**
(21) Anmeldenummer: 00116472.2
(22) Anmeldetag: 29.07.2000
(51) Int. Cl.: D21F 1/70, D21B 1/32

(54) **Flotationsvorrichtung zur Störstoff- insbesondere Druckfarbenentfernung aus Papierfasersuspension**
Flotation apparatus for removing contaminants, especially printing inks, from a fibrous suspension
Dispositif de flottation pour l'élimination des contaminants, notamment des encres d'impression, d'une suspension fibreuse

(30) Priorität: 07.10.1999 DE 19948176
(43) Veröffentlichungstag der Anmeldung: 11.04.2001
(73) Patentinhaber: Voith Paper Patent GmbH, 89522 Heidenheim (DE)
(72) Erfinder: Gommel, Axel, 88214 Ravensburg (DE)

(56) Entgegenhaltungen:
- DE-A- 3 808 154
- DE-B- 2 852 023

## Beschreibung

Die Erfindung betrifft eine Flotationsvorrichtung gemäß dem Oberbegriff des Anspruchs 1.

Derartige Flotationsvorrichtungen dienen dazu, insbesondere bei der Altpapieraufbereitung hergestellte. Faserstoffsuspensionen von Störstoffen, wie Druckfarbenpartikeln und Stickies, zu befreien (Siehe z.B. DE-A-2852023) Dazu werden in bekannter Weise Gasblasen in die Suspension eingemischt, welche - zumeist zusammen mit Chemikalien - in der Flotationsstufe einen die Störstoffe enthaltenden Schaum bilden, der abgeleitet wird. Zum Eintrag der zu reinigenden Suspension in die Flotationsvorrichtung wird ein Verteilelement verwendet, das zumeist auch geeignet ist, z.B. Luft zuzumischen und dadurch Luftblasen in der Suspension zu erzeugen.

Bei den bekannten Flotationsvorrichtungen ist jedoch die Verteilung der Suspension im Volumen der Flotationsvorrichtung nicht optimal.

Es gibt zwar auch andere Flotationsvorrichtungen für den batch-Betrieb, in denen die bereits sich im Flotationsbehälter befindende Suspension durch sogenannte Inferatoren belüftet wird. Das sind Rotoren, die relativ weit unten in der Suspension eintauchen und geeignet sind, die zugeführte Luft so in die Suspension einzumischen und darin zu verteilen, dass Gasblasen entstehen, die den Flotationseffekt ermöglichen. Dargestellt ist so ein Apparat in WfP 20.1976, S. 781. Dieser bekannte Stand der Technik ist aber in den meisten Fällen durch die eingangs beschriebenen Flotationsvorrichtungen verdrängt worden. Ein wesentlicher Nachteil ist ihr hoher Energiebedarf. Sie können zwar auch kontinuierlich betrieben werden, dann ergeben sich aber Probleme bei der gleichmäßigen Suspensionsführung durch den Flotationsbehälter.

Es ist Aufgabe der vorliegenden Erfindung, eine Flotationsvorrichtung zu schaffen, die geeignet ist, eine möglichst effektive Flotation durchzuführen. Dies soll mit geringem Aufwand an Energie erfolgen können. Die Einrichtung soll kompakt und platzsparend aufgebaut sein.

Diese Aufgabe wird durch Merkmal im kennzeichnenden Teil des Anspruchs 1 gelöst.

Die erfindungsgemäße Flotationsvorrichtung enthält also ein als Rotor ausgebildetes Verteilelement für die zu flotierende Suspension. Die Drehbewegung hat den Vorteil, dass die belüftete Suspension sehr gleichmäßig über den Querschnitt des Flotationsgefäßes verteilt wird, was insbesondere bei modemen Säulenflotationsvorrichtungen mit rundem Grundriss zu gewährleisten ist. Die Erfindung dient dem Bestreben, immer intensiver in immer kleinerem Volumen zu flotieren, wobei die gleichmäßige Verteilung der Suspension besonders wichtig ist. Aber auch bei klassischen Behälterformen ist die Erfindung zweckmäßig. Der Ausfluss der Suspension aus den Austrittsöffnungen des Verteilelements führt zu einem Rückstoß, der es in Rotation versetzt. Das kann einen motorischen Antrieb einsparen. In speziellen Ausführungsformen kann das Verteilelement so gestaltet sein, dass die Austrittsöffnungen für die Suspension vom Zentrum des Rotors unterschiedliche Abstände haben, also auf unterschiedlichen Kreisen umlaufen. Das dient einer optimalen Verteilung.

Die Erfindung und ihre Vorteile werden erläutert an Hand von Zeichnungen. Dabei zeigen:
- Fig. 1: den unteren Teil einer erfindungsgemäßen Flotationsvorrichtung in geschnittener Seitenansicht;
- Fig. 2: ein Verteilelement in Ansicht von oben;
- Fig. 3 bis 5: je eine Variante des Verteilelementes, Ansicht von oben;
- Fig. 6: eine weitere Variante des Verteilelementes, Seitenansicht;
- Fig. 7: eine weitere erfindungsgemäße Flotationsvorrichtung in geschnittener Seitenansicht.

Die Figuren enthalten wenig konstruktive Details, machen aber die Funktionen des Erfindungsgegenstandes deutlich.

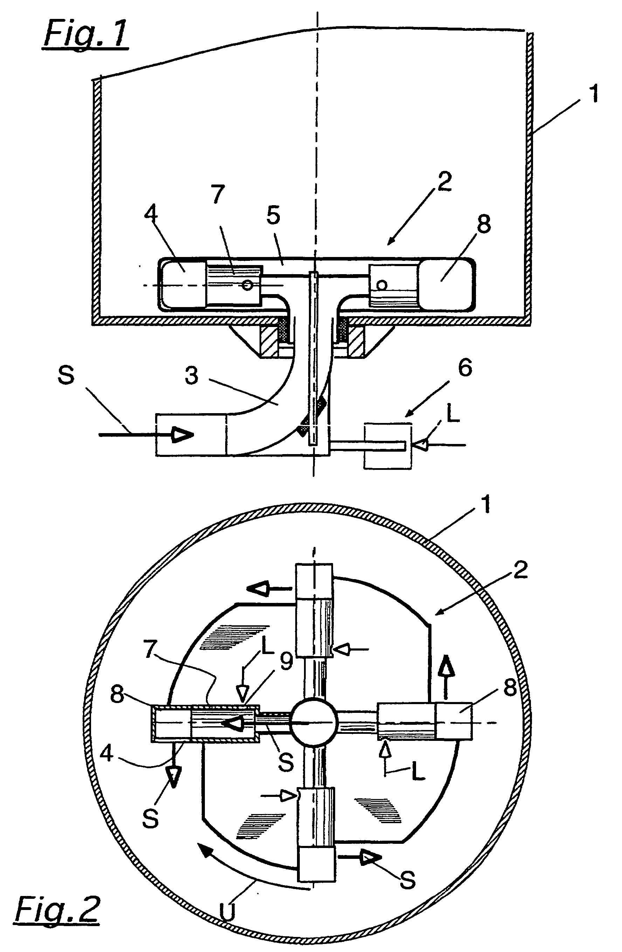

Fig. 1 zeigt den unteren Teil des Behälters 1 einer erfindungsgemäßen Flotationsvorrichtung. Der Behälter 1 ist bei dem hier dargestellten Beispiel als stehender Kreiszylinder ausgeführt. In seinem Zentrum befindet sich das drehbare Verteilelement 2. Bei Betrieb der Vorrichtung wird die Papierfasersuspension S von unten zentral über eine Leitung 3 in das Verteilelement 2 eingeführt und radial nach außen umgelenkt. Die Belüftung der Suspension erfolgt durch Begasungseinrichtungen, welche in an sich bekannter Weise hier als Stufendiffusoren 7 ausgebildet sind. Das Verteilelement 2 weist einen die Stufendiffusoren teilweise umgebenden Hohlraum 5 auf, der mit einer Gasversorgung 6 (hier nur angedeutet) verbunden ist. Da es sich bei dem Verteilelement 2 um ein drehendes und bei dem Behälter 1 und den Zuleitungen um stehende Teile handelt, müssen selbstverständlich Lagerungs- und Abdichtungselemente vorhanden sein. Diese sind hier aber nur angedeutet. Entscheidend für den Erfindungsgegenstand ist, dass die Austrittsöffnungen 4 für die Papierfasersuspension S rückwärts geöffnet sind. Die radiale Strömungsrichtung wird hier rechtwinkelig in die Umfangsrichtung umgelenkt. Es können auch kleinere Umlenkwinkel gewählt werden, wie später noch gezeigt wird. Eine gewisse Radialkomponente kann die Verteilung der Suspension in die Randbereiche des Behälters 1 verbessern. Der Stufendiffusor 7 mündet bei diesem Beispiel in einen Stoßdiffusor 8, in dem die besagte Umlenkung erfolgt. Der Stoßdiffusor bringt dabei gleichzeitig eine vorteilhafte Vermischung von Luft und Suspension.

In Fig. 2 ist ein für die Erfindung verwendbares Verteilelement 2 in Ansicht von oben dargestellt. Man erkennt wiederum den zentralen Zulauf für die Papierfasersuspension S, welche hier innerhalb des Verteilelementes 2 in drei radiale Teilströme aufgeteilt wird. Diese Teilströme durchfließen dann jeweils einen Stufendiffusor 7, welcher zur Begasungseinrichtung gehört. Hinter dem Stufensprung des Stufendiffusors befindet sich mindestens eine Begasungsöffnung 9, durch welche das Gas z.B. Luft in die im Stufendiffusor strömende Suspension eingesaugt und verteilt wird. Anschließend tritt die so belüftete Suspension durch die Austrittsöffnung 4 des Stoßdiffusors 8 aus dem Verteilelement 2 in Umfangsrichtung aus. Die Austrittsöffnung 4 ist gegen die Drehbewegung U des Verteilelementes 2 geöffnet. Durch die Rückstoßkräfte kann die Drehbewegung erzeugt und erhalten werden.

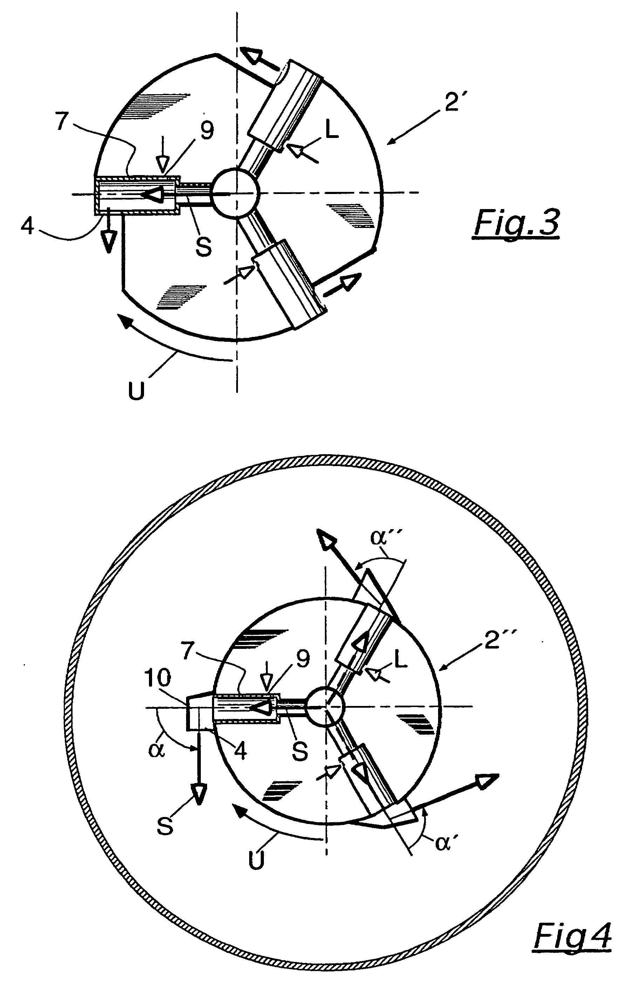

Das in Fig. 3 gezeigte Verteilelement 2' unterscheidet sich von dem der Figuren 1 und 2 dadurch, dass die als Begasungselemente dienenden Stufendiffusoren 7 sich radial bis zum Umfang des Verteilelements erstrecken und eine seitliche Austrittsöffnung 4 aufweisen. Diese Ausführungsform ist etwas einfacher im Aufbau als die bisher gezeigten.

Das Verteilelement 2" der Fig. 4 hat am radialen Ende der Stufendiffusoren Umlenkkammern 10, die jeweils unterschiedlich sind und deren Austrittsöffnungen 4 eine Strömungsrichtung der Suspension erzeugen, die nicht bei allen Umlenkkammern streng in Umfangsrichtung verläuft. Vielmehr erkennt man an den drei dargestellten Austrittskammern durch entsprechende Gestaltung der Abschlussteile unterschiedliche Umlenkwinkel α, α', α''. Der Vorteil dieser Anordnung liegt darin, dass in dem Ringraum, der sich im Behälter 1 radial außerhalb des Verteilelements 2" befindet eine noch bessere Vermischung der verschiedenen Teilströme erfolgen kann.

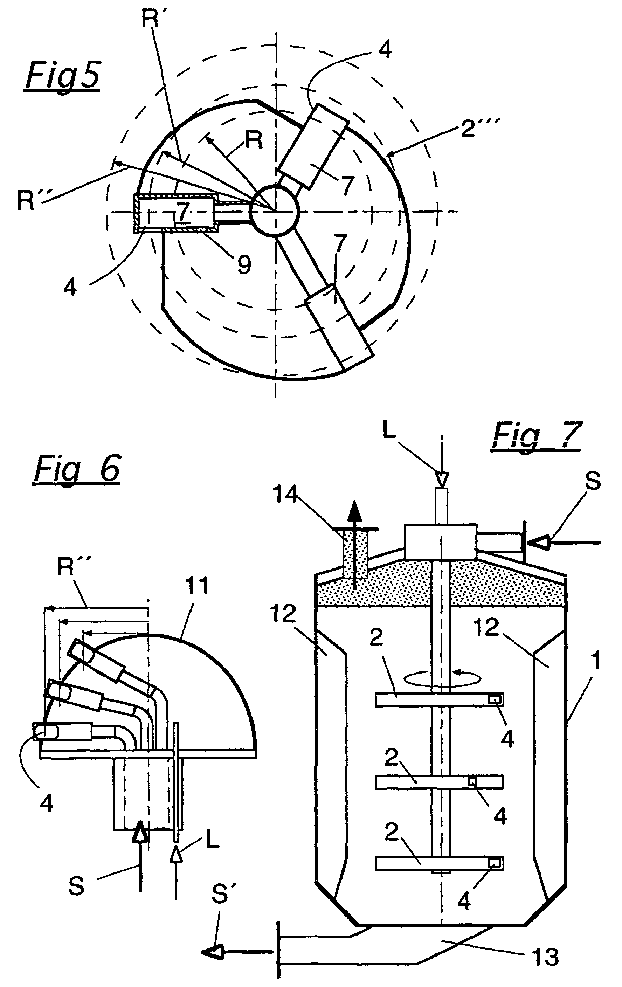

Einem ähnlichen Zweck dient das in Fig. 5 gezeigte Verteilelement 2"'. Bei diesem sind die Austrittsöffnungen 4 in unterschiedlichem Abstand zur Drehmitte dieses Verteilelements angeordnet. Daher laufen diese Austrittsöffnungen 4 auf den unterschiedlichen Radien R, R'und R" um und können auf einfache Weise die ausfließende Suspension gleichmäßig über Umfang und Radius des Behälters 1 verteilen.

Auch die in Fig. 6 gezeigte Variante eines erfindungsgemäßen Verteilelementes ist mit auf unterschiedlichen Radien gelegenen Austrittsöffnungen 4 versehen. Dazu sind diese in einer gewölbten Oberkappe 11 in verschiedenen Höhen angeordnet.

Fig. 7 zeigt schematisch eine Flotationsvorrichtung, in deren Behälter 1 mehrere Verteilelemente 2 übereinander angebracht sind, um für eine besonders gute Verteilung der belüfteten Suspension zu sorgen. Versorgungselemente für Suspension S und Luft L und die Lagerung des Rotors befinden sich im Deckel des Behälters 1. Der Flotationsschaum wird über einen Rejektstutzen 14 abgeleitet und die durch Flotation gereinigte Suspension S' durch einen Gutstoffauslauf 13 im Boden des Behälters. Der Behälter kann mit Strömungsbremsen versehen werden, welche, wie diese Figur zeigt, z.B. als Radialbleche 12 an der Innenwand des Behälters 1 festgemacht sind. Solche Strömungsbremsen verhindern eine unerwünschte Rotation der Suspension im Behälter 1 und fördem die gleichmäßige Verteilung der Luftblasen.

## Patentansprüche

1. Flotationsvorrichtung zur Störstoff- insbesondere Druckfarbenentfernung aus Papierfasersuspensionen (S) mit einem befüllbaren Behälter (1) und mindestens einem innerhalb dieses Behälters (1) angeordneten Verteilelement (2) für die Papierfasersuspension,
**dadurch gekennzeichnet,**
**dass** das Verteilelement (2, 2', 2", 2''') rotierbar ist und dass es Austrittsöffnungen (4) für die Papierfasersuspension (S) aufweist, die rückwärts zur sich beim Rotieren einstellenden Drehbewegung (U) geöffnet sind.

2. Flotationsvorrichtung nach Anspruch 1,
**dadurch gekennzeichnet,**
**dass** das Verteilelement (2, 2', 2", 2''') keinen motorischen Antrieb aufweist, sondern durch den Rückstoß der durch die Austrittsöffnungen (4) ausströmenden Papierfasersuspension (S) angetrieben werden kann.

3. Flotationsvorrichtung nach Anspruch 1 oder 2,
**dadurch gekennzeichnet,**
**dass** das Verteilelement (2, 2', 2", 2''') mit einer Begasungseinrichtung zur Erzeugung von Gasblasen in der Altpapiersuspension versehen ist.

4. Flotationsvorrichtung nach Anspruch 3,
**dadurch gekennzeichnet,**
**dass** die Begasungseinrichtung mindestens einen Stufendiffusor (7) aufweist, welcher von der zu flotierenden Suspension durchströmt wird und jeweils mindestens eine Öffnung hat zur Zuführung von Gas, insbesondere Luft (L), in die Suspension.

5. Flotationsvorrichtung nach Anspruch 3 oder 4,
**dadurch gekennzeichnet,**
**dass** das Verteilelement (2,2',2'',2''') einen Hohlraum (5) aufweist, in den die Begasungseinrichtung eingesetzt ist und der an eine Gasversorgung (6) angeschlossen ist.

6. Flotationsvorrichtung nach einem der voranstehenden Ansprüche,
**dadurch gekennzeichnet,**
**dass** verschiedene Austrittsöffnungen (4) in unterschiedlichen Radien (R, R', R'') zum Rotationszentrum angeordnet sind.

7. Flotationsvorrichtung nach einem der voranstehenden Ansprüche,
**dadurch gekennzeichnet,**
**dass** die Drehachse des Verteilelementes (2, 2', 2", 2''') parallel zur Mittellinie des Behälters (1) ist.

8. Flotationsvorrichtung nach Anspruch 7,
**dadurch gekennzeichnet,**
**dass** das Verteilelement (2, 2', 2", 2''') im Zentrum des Behälters (1) angeordnet ist.

9. Flotationsvorrichtung nach Anspruch 7 oder 8,
**dadurch gekennzeichnet,**
**dass** die Drehachse des Verteilelementes (2, 2', 2'', 2''') senkrecht steht.

10. Flotationsvorrichtung nach einem der voranstehenden Ansprüche,
**dadurch gekennzeichnet,**
**dass** der Umlenkwinkel (α) gegen den Radius 80 bis 90° beträgt.

11. Flotationsvorrichtung nach einem der voranstehenden Ansprüche,
**dadurch gekennzeichnet,**
**dass** die Umlenkwinkel (α, α', α'') eines Verteilelementes (2'') unterschiedlich groß sind.

12. Flotationsvorrichtung nach einem der voranstehenden Ansprüche,
**dadurch gekennzeichnet,**
**dass** der Behälter (1) ein runder Zylinder ist.

13. Flotationsvorrichtung nach Anspruch 12,
**dadurch gekennzeichnet,**
**dass** der Außendurchmesser des Verteilelementes (2,2',2'',2''') mindestens ein Viertel so groß ist wie der Durchmesser des Behälters (1).

## Claims

1. A flotation device for removing anionic trash and in particular printing ink from paper fibre suspensions (S), comprising a fillable vessel (1) and at least one distribution element (2) arranged within this vessel (1) for the paper fibre suspension,
**characterised in that**
the distribution element (2, 2', 2", 2''') is rotatable and that it has outlet openings (4) for the paper fibre suspension (S) which are open backwards relative to the rotary movement (U) occurring upon rotation.

2. A flotation device according to Claim 1,
**characterised in that**
the distribution element (2, 2', 2", 2''') does not have a motor drive, but can be driven by the recoil of the paper fibre suspension (S) flowing through the outlet openings (4).

3. A flotation device according to Claim 1 or 2,
**characterised in that**
the distribution element (2, 2', 2", 2''') is provided with a gassing means for producing gas bubbles in the waste paper suspension.

4. A flotation device according to Claim 3,
**characterised in that**
the gassing means has at least one stepped diffuser (7) through which the suspension to undergo flotation flows and in each case at least one opening for supplying gas, in particular air (L), to the suspension.

5. A flotation device according to Claim 3 or 4,
**characterised in that**
the distribution element (2, 2', 2'', 2''') has a cavity (5) into which the gassing means is inserted and which is connected to a gas supply means (6).

6. A flotation device according to one of the preceding claims,
**characterised in that**
different outlet openings (4) are arranged in different radii (R, R', R") to the centre of rotation.

7. A flotation device according to one of the preceding claims,
**characterised in that**
the axis of rotation of the distribution element (2, 2', 2", 2''') is parallel to the centre line of the vessel (1).

8. A flotation device according to Claim 7,
**characterised in that**
the distribution element (2, 2', 2", 2''') is located in the centre of the vessel (1).

9. A flotation device according to Claim 7 or 8,
**characterised in that**
the axis of rotation of the distribution element (2, 2', 2", 2''') is vertical.

10. A flotation device according to one of the preceding claims,
**characterised in that**
the angle of deflection (*a*) relative to the radius is 80 to 90°.

11. A flotation device according to one of the preceding claims,
**characterised in that**
the angles of deflection (*α, α',* α") of a distribution element (2") are of different sizes.

12. A flotation device according to one of the preceding claims,
**characterised in that**
the vessel (1) is a round cylinder.

13. A flotation device according to Claim 12,
**characterised in that**
the external diameter of the distribution element (2, 2', 2", 2''') is at least one quarter as large as the diameter of the vessel (1).

## Revendications

1. Dispositif de flottation destiné à l'élimination d'impuretés, notamment d'encre d'impression, de suspensions (S) de fibres de papier, comportant un réservoir (1) pouvant être rempli, et au moins un élément de répartition (2) pour la suspension de fibres de papier disposé à l'intérieur du réservoir (1),
**caractérisé en ce que**
l'élément de répartition (2, 2', 2'', 2''') est rotatif, et **en ce qu'**il comporte des orifices de sortie (4) pour la suspension (S) de fibres de papier, qui sont ouverts vers l'arrière dans le sens du mouvement de rotation (U) s'instaurant lors de la rotation.

2. Dispositif de flottation selon la revendication 1,
**caractérisé en ce que**
l'élément de répartition (2, 2', 2'', 2''') ne comporte pas d'entraînement motorisé, mais qu'il peut être entraîné par le choc en retour de la suspension (S) de fibres de papier s'écoulant des orifices de sortie (4).

3. Dispositif de flottation selon la revendication 1 ou 2,
**caractérisé en ce que**
l'élément de répartition (2, 2', 2'', 2''') est muni d'un dispositif de gazage pour la génération de bulles de gaz dans la suspension de vieux papiers.

4. Dispositif de flottation selon la revendication 3,
**caractérisé en ce que**
le dispositif de gazage comporte au moins un diffuseur à gradins (7), lequel est traversé par la suspension à flotter, et à chaque fois au moins un orifice pour l'amenée de gaz, notamment d'air (L), dans la suspension.

5. Dispositif de flottation selon la revendication 3 ou 4,
**caractérisé en ce que**
l'élément de répartition (2, 2', 2'', 2''') comporte un espace creux (5) dans lequel est inséré le dispositif de gazage, et qui est raccordé à une alimentation de gaz (6).

6. Dispositif de flottation selon l'une quelconque des revendications précédentes,
**caractérisé en ce que**
différents orifices de sortie (4) sont disposés dans différents rayons (R, R', R'') par rapport au centre de rotation.

7. Dispositif de flottation selon l'une quelconque des revendications précédentes,
**caractérisé en ce que**
l'axe de rotation de l'élément de répartition (2, 2', 2'', 2''') est parallèle à l'axe médian du réservoir (1).

8. Dispositif de flottation selon la revendication 7,
**caractérisé en ce que**
l'élément de répartition (2, 2', 2'', 2''') est disposé au centre du réservoir (1).

9. Dispositif de flottation selon la revendication 7 ou 8,
**caractérisé en ce que**
l'axe de rotation de l'élément de répartition (2, 2', 2'', 2''') est vertical.

10. Dispositif de flottation selon l'une quelconque des revendications précédentes,
**caractérisé en ce que**
l'angle de déviation (α) par rapport au rayon est de 80 à 90°.

11. Dispositif de flottation selon l'une quelconque des revendications précédentes,
**caractérisé en ce que**
l'angle de déviation (α, α', α'') d'un élément de répartition (2'') est de valeur différente.

12. Dispositif de flottation selon l'une quelconque des revendications précédentes,
**caractérisé en ce que**
le réservoir (1) est un cylindre rond.

13. Dispositif de flottation selon la revendication 12,
**caractérisé en ce que**
le diamètre extérieur de l'élément de répartition (2, 2', 2'', 2''') est égal à au moins un quart du diamètre du réservoir (1).
